# FASCICULE DE BREVET EUROPEEN

(11) **EP 4 478 023 B1**
(45) Date de publication et mention de la délivrance du brevet: **26.08.2026**
(21) Numéro de dépôt: 24020195.4
(22) Date de dépôt: 12.06.2024
(51) Int. Cl.: G01N 1/02

(54) **MÉTHODE DE RÉALISATION D'UN PRÉLÈVEMENT SUR UNE SURFACE REVÊTUE**
VERFAHREN ZUR HERSTELLUNG EINER ENTNAHME AUF EINER BESCHICHTETEN OBERFLÄCHE
METHOD FOR MAKING A SAMPLE ON A COATED SURFACE

(30) Priorité: 12.06.2023 FR 2305946
(43) Date de publication de la demande: 18.12.2024
(73) Titulaire: YSPEKH Sàrl, 1454 L'Auberson (CH)
(72) Inventeur: Dupayrat, Marc, 25300 PONTARLIER (FR)
(74) Mandataire: Stona, Daniel

(56) Documents cités:
- US-A1- 2015 168 272
- US-B2- 10 766 163

## Description

### Arrière-plan de l'invention

La caractérisation de revêtements de surface est fondamentale dans de multiples domaines. Cette caractérisation peut être d'ordre physique (dureté, épaisseur, nombre de revêtements superposés ...) ou chimique (identification et quantification des contaminants de surface par frottement ou diffusion, identification et quantification des espèces et éléments chimiques.

Les raisons d'identifier ces revêtements physico-chimiquement peuvent être l'ingénierie inverse ("reverse engineering" en anglais), la prévention de dangers dus à des substances toxiques en cas de manipulation, des retraits de matière, etc.

Sur un grand nombre de revêtements de surface, il n'est pas possible d'apposer un outil d'analyse approprié puisque ce dernier n'est pas transportable (cas de la spectrométrie de masse à plasma à couplage inductif "ICPMS", de la spectrométrie de masse d'ions secondaires "SIMS", ou du microscope électronique à balayage "MEB", ...). Il est alors nécessaire de prélever un échantillon de revêtement et de l'apporter à un laboratoire d'analyses.

Il existe de multiples possibilités pour réaliser un prélèvement : utilisation d'un cutter, ponçage, carottage. Mais la possibilité d'effectuer le prélèvement du revêtement seul, qu'il soit 'dur ou mou', jusqu'au substrat sous-jacent, tout en en connaissant précisément l'aire ayant subi le prélèvement, en minimisant les risques de contamination d'un prélèvement à l'autre et en limitant l'exposition de l'opérateur n'a jusqu'à présent pas encore été décrite.

La connaissance de l'aire érodée permet d'obtenir une information quantitative en termes de quantité de matière prélevée par unité de surface. Ceci est parfois indispensable, par exemple lorsqu'il est nécessaire de connaitre la masse de métaux lourds/PCB (polychlorobiphényles) qu'il faudra évacuer lors du retrait d'une peinture anticorrosion avant son retrait d'une citerne. Ou vis-à-vis de l'exposition des travailleurs et de l'environnement face au risque de dispersion de ces polluants si cette même citerne devait être poncée.

Le brevet étasunien délivré sous le numéro 10,766,163 divulgue une méthode de réalisation d'un prélèvement sur une surface, comportant les étapes suivantes consistant à:
- se procurer une scie oscillante,
- se procurer une lame de scie oscillante modifiée, présentant une section de fixation à la scie oscillante se prolongeant par une section de liaison faisant un angle (a) avec le plan de la section de fixation, cette section de liaison se terminant par une section d'abrasion faisant un angle (180-a) avec le plan de la section de liaison, de façon à être parallèle à la section de fixation, et ayant une extrémité dentée incurvée en s'éloignant du plan de la section de fixation,
- fixer la lame modifiée à la scie oscillante,
- actionner la scie oscillante et
- procéder à l'abrasion de la surface en appuyant l'extrémité dentée incurvée de la section d'abrasion contre la surface.

### Exposé sommaire de l'invention

Le but principal de l'invention est de proposer une méthode qui permette de réaliser un prélèvement sur une surface revêtue, en vue de pouvoir effectuer une analyse qualitative (caractérisation des espèces chimiques) et/ou quantitative (quantité d'espèces chimiques par unité de surface revêtue) du revêtement. Selon l'invention, ce but est atteint à l'aide d'une méthode conforme à la revendication 1 jointe.

La méthode selon l'invention présente notamment les avantages suivants :
- il s'agit d'une méthode de grattage à froid, il n'y a donc pas de détérioration thermochimique des composants du revêtement ;
- tout s'effectue à sec, aucun diluant n'est utilisé comme c'est le cas avec des peintures, les diluants étant généralement néfastes aux analyses prévues sur la poudre collectée ;
- la surface revêtue à analyser peut être verticale, horizontale ou inclinée ;
- les poussières éjectées par la lame le sont latéralement, ce qui limite considérablement, voire annule, les projections vers l'extérieur à travers l'évidement du récipient.

Des caractéristiques avantageuses de la méthode de la revendication 1 sont indiquées dans les revendications 2 à 8 jointes.

L'invention a également pour objet un kit de prélèvement suivant la revendication 9 jointe.

Des caractéristiques avantageuses du kit de prélèvement de la revendication 9 sont formulées aux revendications 10-14 jointes.

D'autres caractéristiques et avantages de l'invention vont maintenant être décrits en détail dans l'exposé suivant qui est donné en référence aux figures annexées, lesquelles représentent schématiquement :
[Fig. 1] : une scie oscillante classique équipée d'une lame modifiée selon la divulgation présente ;
[Fig. 2] : une lame de scie oscillante classique (de l'art antérieur) ;
[Fig. 3] : une lame de scie oscillante modifiée selon la divulgation présente
[Fig. 4a] et [Fig. 4b] : un premier exemple de récipient en vue de face et en vue de gauche en coupe ;
[Fig. 5] : un deuxième exemple de récipient, en vue en perspective ;
[Fig. 6] : un troisième exemple de récipient, en vue en perspective ; et
[Fig. 7] : une illustration de la méthode selon l'invention en cours d'exécution.

### Exposé détaillé de l'invention

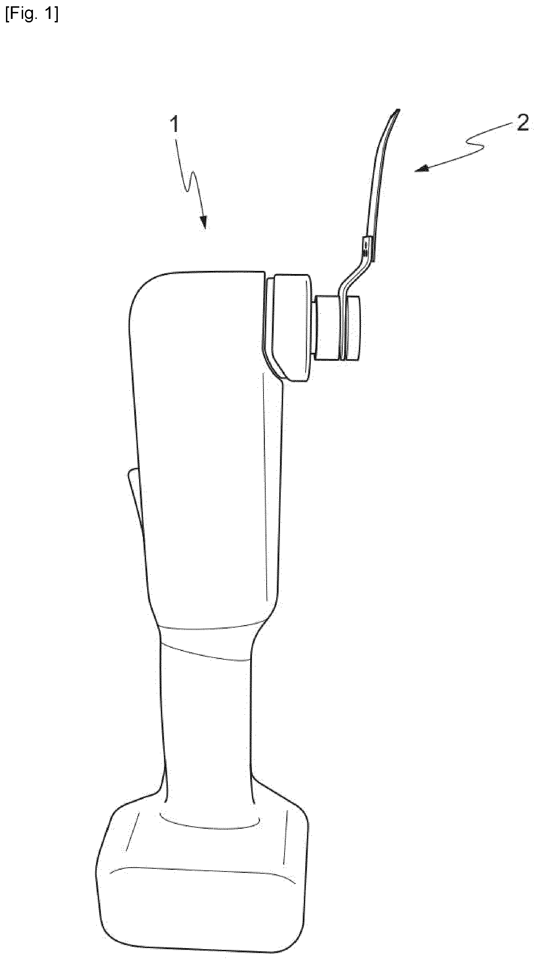

Sur la figure 1 est représentée une scie oscillante classique 1 équipée d'une lame 2 modifiée selon la divulgation présente, qui peut être branchée sur le secteur ou fonctionner sur batterie.

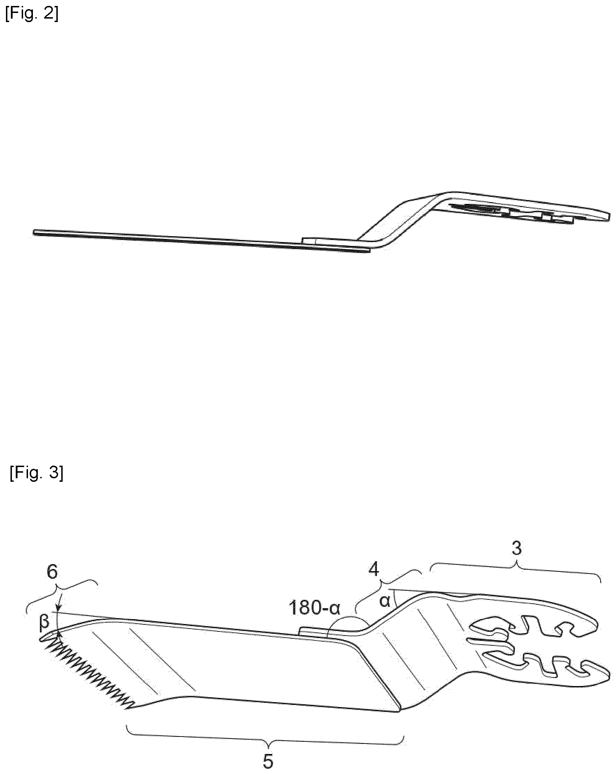

La scie oscillante 1 est une scie oscillante disponible dans le commerce. Elle effectue généralement de 5 000 à 20 000 oscillations par seconde avec une amplitude de mouvements de rotation alternants de faible amplitude et grande régularité et précision. Les particules du revêtement frotté sont donc éjectées dans une direction sensiblement constante et une vitesse qui est fonction de la puissance ou pression appliquée sur chaque dent de la lame modifiée. Celle-ci est visible plus en détail sur la figure 3 et peut être comparée à une lame classique de scie oscillante visible sur la figure 2.

Comme on peut le voir sur la figure 3, la lame de scie oscillante modifiée selon la divulgation présente résulte d'une modification de la lame du commerce de la figure 2.

Ainsi, la lame modifiée présente une section de fixation classique 3 à la scie oscillante, qui se prolonge par une section de liaison classique 4 faisant un angle α avec le plan de la section de fixation 3, cette section de liaison 4 se terminant par une section d'abrasion 5 faisant un angle (180 - α) avec le plan de la section de liaison 4, de façon à être parallèle à la section de fixation 3.

Les sections de fixation 3, de liaison 4 et d'abrasion 5 sont planes, c'est pourquoi il est possible d'employer l'expression « plan de la section » sans ambigüité. L'extrémité dentée 6 de la section d'abrasion 5 de lame 2 a été modifiée afin d'être incurvée en s'éloignant du plan de la section de fixation 3. Grâce à la courbure, l'extrémité dentée 6 est en mesure d'attaquer efficacement le revêtement à analyser.

En effet, avec une lame du commerce comme celle de la figure 2, l'angle d'attaque de la surface des dents par rapport à la surface à érodée est, suivant les lames, de 'négatif' (pas d'abrasion) à moins de 10 degrés. L'effort appliqué sur la lame durant l'opération diminue cet angle qui avoisine alors 0 degré (aucune abrasion).

Il est donc nécessaire de retravailler/modifier les lames disponibles dans le commerce pour qu'elles puissent travailler efficacement.

La courbure peut être assimilée à une inclinaison, ce qui permet de définir un angle β par rapport au plan de la partie d'abrasion 5, visible sur la figure 3 et qui est de préférence d'au moins 45 degrés. Cependant, cet angle est préférablement choisi en fonction de la dureté du matériau à abraser. En effet, une peinture à éroder sur un support de bois ou de plâtre nécessite une lame différente de celle qui est nécessaire pour attaquer une galvanisation sur un acier ou un émaillage sur une tôle métallique.

La modification de la lame, c'est-à-dire son courbement ou son inclinaison, est obtenue en chauffant l'extrémité dentée d'une lame classique, en la tordant par exemple entre 70 et 90 degrés, puis en la trempant immédiatement dans de l'eau afin qu'elle puisse retrouver sa dureté.

La méthode selon l'invention implique également le recours à un récipient pour collecter la poudre de revêtement arrachée par les dents de la lame.

Selon l'invention, ce récipient a au moins une partie transparente et une ouverture dont la forme du bord est prévue pour épouser la forme de la surface revêtue. En effet, le bord du récipient ne peut pas avoir la même forme pour prélever un échantillon sur une surface plane, par exemple un mur, que pour prélever un échantillon sur une surface non plane, cylindrique par exemple, comme celle d'un poteau.

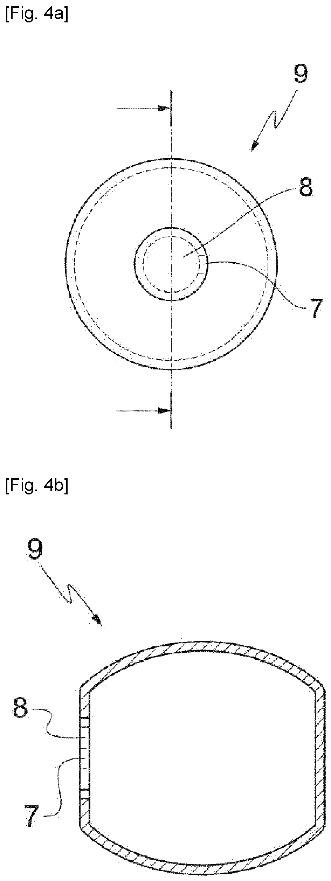

Sur les figures 4a et 4b est représenté un premier exemple de récipient 9 pour surface à analyser plane. Ce récipient 9 a une forme ellipsoïdale ayant une extrémité longitudinale tronquée et fermée et une autre extrémité longitudinale tronqué ouverte.

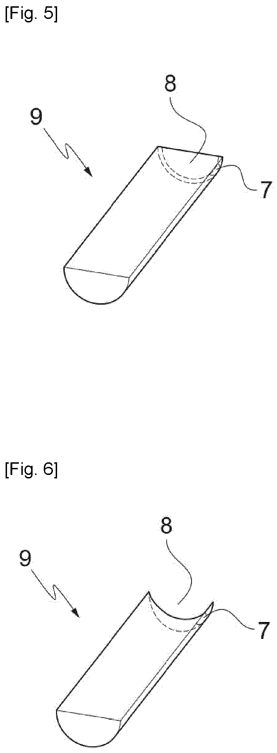

Sur la figure 5 est représenté un deuxième exemple de récipient 9 pour surface à analyser plane, en forme de demi-cylindre dont une extrémité longitudinale est fermée et l'autre est ouverte.

Sur la figure 6 est représenté un troisième exemple de récipient 9 pour surface à analyser cylindrique, en forme de demi-cylindre dont une extrémité longitudinale est fermée et l'autre est ouverte et circulaire pour s'adapter à la surface à analyser cylindrique.

Selon l'invention, les récipients 9 sont au moins partiellement transparents, de préférence totalement transparents. Ils peuvent être constitués de tout matériau approprié, par exemple, du verre, un matériau plastique (polyéthylène, plexigas^{®}...). De préférence est choisi un matériau facilement nettoyable/décontaminable après chaque prélèvement.

Quelle que soit la forme de la surface à analyser, le bord de l'ouverture 8 du récipient 9 comporte un évidement 7 prévu pour le passage de la lame et tenant compte de ses mouvements d'oscillation latéraux.

Les dimensions de l'évidement sont donc préférentiellement au moins égales à celles de la section transversale de la section d'abrasion de la lame, additionnée de l'amplitude latérale prévue des mouvements d'oscillation de cette lame.

De préférence, l'évidement ou fente se trouve dans la partie transparente du récipient.

Une fois tous les instruments/outils à sa disposition, l'utilisateur peut exécuter les étapes suivantes :
- fixer de façon classique la lame modifiée 2 à la scie oscillante 1, l'extrémité dentée incurvée 6 étant alors du côté opposé à la scie oscillante 1,
- plaquer l'ouverture 8 du récipient 9 contre la surface revêtue à analyser,
- faire passer la section d'abrasion 5 de la lame 2 dans l'évidement 7 du récipient 9, à travers la paroi de celui-ci,
- actionner la scie oscillante 1 et
- procéder à l'abrasion de la surface en appuyant l'extrémité dentée incurvée 6 de la section d'abrasion 5 contre la surface revêtue et en contrôlant l'opération à travers la partie transparente du récipient 9.

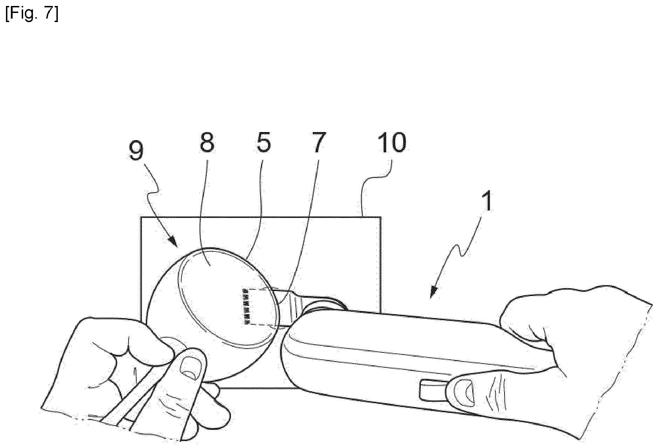

L'opération d'abrasion est représentée sur la figure 7, on l'on peut voir un utilisateur tenant d'une main un récipient 9 totalement transparent dont l'ouverture 8 est plaquée contre la surface plane revêtue. De l'autre main, il tient la scie 1 dans laquelle a été fixée une lame modifiée 2 selon la divulgation présente dont on distingue la section d'abrasion 5 qui traverse l'évidement 7 du récipient 9.

L'éjection des particules de revêtement s'effectue sensiblement à 90 degrés par rapport au plan de la partie d'abrasion 5 de la lame 2, ce qui permet à la totalité ou à quasi-totalité de ces particules d'être collectée dans le récipient 9. L'abrasion est de préférence poursuivie jusqu'à ce que l'utilisateur estime qu'il a collecté suffisamment de poudre pour les analyses qualitatives.

Les particules détachées par la lame modifiée sont alors collectées peu à peu dans le récipient 9. Une fois l'opération d'abrasion terminée, l'opérateur éloigne précautionneusement le récipient 9 de la surface abrasée. Il peut ensuite transvaser les particules dans un conteneur approprié (un sachet fermé par exemple) et les fournir à un laboratoire d'analyses.

Selon un mode de réalisation avantageux de l'invention, pour éviter de salir l'intérieur du récipient 9 dont le nettoyage est délicat car il ne faut pas rendre opaque sa partie transparente, il est prévu d'utiliser un sachet au moins partiellement transparent, de préférence en plastique, de l'introduire dans le récipient 9 après l'avoir ouvert et de rabattre ses bords autour des bords du récipient 9, la partie transparente du sachet se situant du même côté que la partie transparente du récipient 9.

Puis, les bords du sachet sont fixés aux bords du récipient 9, par exemple à l'aide d'un élastique.

De préférence, le sachet a une contenance correspondant au volume du creux du récipient 9, de façon à occuper tout l'intérieur de celui-ci.

Il est même possible, pour ne pas risquer de contaminer la paroi extérieure du sachet, de recourir à un double ensachage, c'est-à-dire à mettre le sachet dans un deuxième sachet.

Grâce à la transparence au moins partielle à la fois du récipient 9 et du ou des sachets, l'opérateur peut visualiser la zone de travail de la lame modifiée 2.

Une fois l'abrasion terminée, le récipient est éloigné délicatement de la surface abrasée, le sachet est fermé puis envoyé à un laboratoire qui analysera les espèces chimiques présentes.

Lors de l'opération d'abrasion avec ou sans sachet, la surface à abraser est généralement verticale. Il est alors avantageux d'employer un récipient 9 ayant au moins un côté convexe.

On peut donc utiliser un récipient ayant une forme sensiblement (semi-)sphérique, (semi-)ellipsoïdale, (semi-)ovoïdale, (semi-)cylindrique, etc., avec un côté ouvert, comme ceux représentés sur les figures 4a, 4b, 5 et 6.

Les dimensions de l'ouverture 8 dépendent de la largeur de la lame modifiée 2, elles sont généralement de 4 à 8 centimètres de diamètre.

Le récipient 9 est alors avantageusement positionné de manière à ce que son côté convexe soit tourné vers le sol.

De préférence, on utilise une forme de récipient ayant une double convexité, une dans un premier plan et une autre dans un deuxième plan perpendiculaire à ce premier plan. Ainsi, lorsque la zone à abraser est verticale (surface plane verticale ou cylindrique verticale), les particules se rassemblent à distance de la zone abrasée grâce à la première convexité (ou courbure, côté bombé ou arrondi du récipient 9) dans un plan sensiblement perpendiculaire au plan de la section d'abrasion 5, ce qui permet d'éviter les pertes sur les bords lorsque l'ensemble sachet(s)/récipient 9 est éloigné du mur.

Et, grâce à la deuxième convexité dans un plan sensiblement parallèle au plan de la section d'abrasion 5, les particules se rassemblent en outre au centre de cette deuxième convexité.

C'est pourquoi, les formes à double convexité, comme les formes sensiblement (semi-)sphérique, (semi-)ellipsoïdale ou (semi-)ovoïdale (Fig. 4a et 4b), sont préférées aux formes à simple convexité comme la forme sensiblement (semi-)cylindrique (Fig. 5 et Fig. 6).

La méthode selon l'invention, telle qu'elle vient d'être décrite jusqu'à présent, permet de collecter des particules qui peuvent ensuite être analysées qualitativement.

Selon un autre mode de réalisation avantageux, la méthode selon l'invention est utilisée à fins d'analyse quantitative venant compléter ou non l'analyse qualitative.

Une analyse uniquement quantitative permet de déterminer la quantité globale de revêtement par unité de surface. Cela présente peu d'intérêt.

Une analyse qualitative permet de détecter la présence d'espèces chimiques et, en la complétant par une analyse quantitative, il est possible de déterminer la quantité globale de chaque espèce chimique présente dans l'échantillon prélevé. En divisant la quantité globale d'une espèce par le poids de l'échantillon, il est possible de connaître la teneur de cette espèce dans l'échantillon prélevé.

Mais cette valeur est insuffisante, car elle ne tient pas compte de l'épaisseur du revêtement. Par exemple, un revêtement contenant 0,01% de substance toxique peut être sans danger s'il est extrêmement mince, mais il peut être dangereux si le revêtement est épais.

Néanmoins, mesurer l'épaisseur du revêtement est particulièrement difficile. L'inventeur a donc eu la brillante idée de déterminer l'aire de surface abrasée pour pouvoir ensuite calculer la teneur de chaque espèce recherchée par unité de surface du revêtement.

Cependant, il faut pour cela prélever la totalité du revêtement sur l'entièreté de l'aire considérée en exécutant l'abrasion sur toute l'épaisseur du revêtement, c'est-à-dire jusqu'à atteindre le substrat sous-jacent.

De façon surprenante, ceci peut être réalisé simplement, grâce à la partie transparente du récipient qui permet à l'opérateur de s'assurer qu'il a retiré tout le revêtement.

Ainsi, avant de procéder à l'abrasion, l'opérateur délimite la zone à abraser 10 (Fig. 7), par exemple au moyen d'un marqueur. L'opération d'abrasion est ensuite effectuée uniquement dans cette zone 10 et sur la totalité de l'épaisseur du revêtement.

De préférence, afin de déterminer facilement l'aire de la zone à abraser 10, après l'avoir délimitée, l'opérateur place un instrument gradué, tel qu'un mètre, à côté d'elle et prend en photo la zone à abraser 10 et l'instrument gradué. Ceci lui permettra par la suite de calculer de calculer par analyse d'image avec précision l'aire de la zone abrasée et de déterminer avec précision les quantités d'espèces chimiques par unité de surface du revêtement.

### Considérations pratiques

Les lames 2 modifiées selon la divulgation présente sont des consommables, tout comme les sachets.

Plusieurs récipients 9 de tailles et formes différentes sont de préférence prévus pour des surfaces à analyser différentes.

Une attention particulière doit être portée au nettoyage des outils de prélèvement telle que la lame modifiée 2 et le récipient 9. Suivant le type de revêtement à analyser, un solvant peut être nécessaire pour nettoyer la lame 2. Pour des analyses de composés organiques, cela peut être de l'alcool (méthanol, éthanol...) ou de l'acétone.

La plupart des papiers "essuie-tout" permet un nettoyage sans apport de contamination, mais il est préférable de fournir un échantillon témoin de l'"essuie-tout" au laboratoire pour s'assurer de l'impossibilité d'une contamination.

La surface à analyser doit faire l'objet d'un nettoyage préalable sur une aire plus grande que celle prévue pour l'analyse.

En cas d'utilisation d'un ou de deux sachets, percer préalablement les sachets et disposer le perçage au niveau de l'évidement 7 du récipient 9 afin que la lame puisse traverser le sachet et la paroi du récipient 9 pour pénétrer au sein de ce dernier.

Lorsque l'ouverture du récipient 9 est plaquée d'une main contre la surface revêtue à analyser, le placage doit viser l'herméticité. Puis l'autre main doit actionner la scie oscillante 1 et abraser la surface à analyser, le cas échéant dans toute la zone 10 délimitée par le marqueur, en faisant éventuellement glisser l'ouverture du récipient 9 sur la surface revêtue tout en la maintenant bien plaquée contre celle-ci, pour couvrir le cas échéant la totalité de la zone délimitée 10 et pour que la poudre de revêtement arrachée tombe uniquement dans le sachet.

Dans le cas où la surface revêtue à analyser est horizontale, par exemple, lorsqu'il s'agit d'un sol, les particules ou poussières restent au sol, il faut alors les collecter sur une feuille, notamment à l'aide d'un pinceau de préférence à usage unique, pour les verser ensuite dans un sachet.

## Revendications

1. Méthode de réalisation d'un prélèvement sur une surface revêtue, comportant les étapes suivantes consistant à :
- se procurer une scie oscillante (1),
- se procurer une lame de scie oscillante modifiée (2), présentant une section de fixation (3) à la scie oscillante (1) se prolongeant par une section de liaison (4) faisant un angle (α) avec le plan de la section de fixation (3), cette section de liaison (4) se terminant par une section d'abrasion (5) faisant un angle (180-α) avec le plan de la section de liaison (4), de façon à être parallèle à la section de fixation (3), et ayant une extrémité dentée (6) incurvée en s'éloignant du plan de la section de fixation (3),
- se procurer un récipient (9) ayant au moins une partie transparente et une ouverture (8) dont le bord est prévu pour épouser la forme de la surface revêtue et comporte un évidement (7) prévu pour le passage de la section d'abrasion (5) de la lame modifiée (2), en tenant compte de ses mouvements d'oscillation,
- fixer la lame modifiée (2) à la scie oscillante (1),
- plaquer l'ouverture du récipient (9) contre la surface revêtue,
- faire passer la section d'abrasion (5) de la lame modifiée (2) dans l'évidement (7) du récipient (9), à travers la paroi de celui-ci,
- actionner la scie oscillante (2) et
- procéder à l'abrasion de la surface en appuyant l'extrémité dentée incurvée (6) de la section d'abrasion (5) contre la surface revêtue et en contrôlant l'opération à travers la partie transparente du récipient (9).

2. Méthode selon la revendication 1, comportant en outre les étapes suivantes consistant, avant de plaquer l'ouverture du récipient (9) contre la surface revêtue, à :
- se procurer un sachet au moins partiellement transparent,
- l'ouvrir,
- l'introduire dans le récipient (9) et rabattre ses bords autour des bords du récipient (9), la partie transparente du sachet se situant du même côté que la partie transparente du récipient (9) et
- fixer les bords du sachet aux bords du récipient (9).

3. Méthode selon la revendication 2, dans lequel le sachet a une contenance correspondant au volume du creux du récipient (9).

4. Méthode selon l'une des revendication 1 à 3, dans lequel la surface est verticale.

5. Méthode selon la revendication 4, dans lequel le récipient (9) a au moins un côté convexe et est positionné de manière à ce que ce côté convexe soit tourné vers le sol.

6. Méthode selon l'une des revendications 1 à 5, comportant en outre une étape préalable consistant à délimiter la zone à abraser (10), l'opération d'abrasion étant ensuite effectuée uniquement dans cette zone (10) et sur la totalité de l'épaisseur du revêtement.

7. Méthode selon la revendication 6, comprenant en outre une étape, préalable à l'abrasion, de prise d'une photo de la zone à abraser (10) à côté de laquelle a été placé un instrument gradué.

8. Méthode selon l'une des revendications 1 à 7, dans lequel la surface revêtue est plane.

9. Kit de prélèvement pour la mise en œuvre de la méthode selon l'une des revendications 1 à 8, comprenant :
- au moins une lame de scie oscillante modifiée (2), présentant une section de fixation (3) à la scie oscillante (1) se prolongeant par une section de liaison (4) faisant un angle (α) avec le plan de la section de fixation (3), cette section de liaison (4) se terminant par une section d'abrasion (5) faisant un angle (180-α) avec le plan de la section de liaison (4), de façon à être parallèle à la section de fixation (3), et ayant une extrémité dentée (6) incurvée en s'éloignant du plan de la section de fixation (3), et
- un récipient (9) dont l'ouverture (8) a un bord prévu pour épouser la forme de la surface revêtue et comportant un évidement (7) prévu pour le passage de la section d'abrasion (5) de la lame modifiée (2), en tenant compte de ses mouvements d'oscillation.

10. Kit de prélèvement selon la revendication 9, comprenant en outre au moins un sachet au moins partiellement transparent.

11. Kit de prélèvement selon la revendication 10, dans lequel le sachet a une contenance correspondant au volume du creux du récipient (9).

12. Kit de prélèvement selon l'une des revendications 9 à 11, dans lequel l'évidement (7) se situe dans la partie transparente du récipient (9).

13. Kit de prélèvement selon l'une des revendications 9 à 12, dans lequel le récipient (9) a au moins un côté convexe.

14. Kit de prélèvement selon l'une des revendications 9 à 13, comprenant en outre une scie oscillante (1).

## Patentansprüche

1. Verfahren zur Umsetzung einer Probennahme auf einer beschichteten Oberfläche, das die folgenden Schritte umfasst:
- Bereitstellen einer oszillierenden Säge (1),
- Bereitstellen eines modifizierten oszillierenden Sägeblatts (2), das einen Befestigungsabschnitt (3) zur Befestigung an der oszillierenden Säge (1) aufweist, der sich in einen Verbindungsabschnitt (4) fortsetzt, der einen Winkel (α) mit der Ebene des Befestigungsabschnitts (3) bildet, wobei dieser Verbindungsabschnitt (4) in einem Abriebabschnitt (5) endet, der einen Winkel (180°-α) zur Ebene des Verbindungsabschnitts (4) derart bildet, dass er parallel zum Befestigungsabschnitt (3) verläuft, und der ein gezahntes Ende (6) aufweist, das von der Ebene des Befestigungsabschnitts (3) weg gekrümmt ist,
- Bereitstellen einer Aufnahme (9), die mindestens einen transparenten Teil und eine Öffnung (8) aufweist, deren Rand ausgebildet ist, um sich der Form der beschichteten Oberfläche anzupassen, und der eine Aussparung (7) aufweist, die für den Durchgang des Abriebabschnitts (5) des modifizierten Sägeblatts (2) unter Berücksichtigung dessen Oszillationsbewegungen vorgesehen ist,
- Befestigen des modifizierten Sägeblatts (2) an der oszillierenden Säge (1),
- Anlegen der Öffnung der Aufnahme (9) gegen die beschichtete Oberfläche,
- Führen des Abriebabschnitt (5) des modifizierten Sägeblatts (2) in die Aussparung (7) der Aufnahme (9) und durch deren Wandung,
- Betätigen der oszillierenden Säge (2) und
- Vornehmen des Abriebs der Oberfläche, indem das gekrümmte, gezahnte Ende (6) des Abriebabschnitts (5) gegen die beschichtete Oberfläche angelegt und der Vorgang durch den transparenten Teil der Aufnahme (9) überwacht wird.

2. Verfahren nach Anspruch 1, das ferner die folgenden Schritte umfasst, die vor dem Anlegen der Öffnung der Aufnahme (9) an die beschichtete Oberfläche umfassen:
- Bereitstellen eines zumindest teilweise transparenten Beutels,
- ihn öffnen,
- ihn in die Aufnahme (9) einführen und dessen Ränder um die Ränder der Aufnahme (9) zu falten, wobei sich der transparente Teil des Beutels auf derselben Seite wie der transparente Teil der Aufnahme (9) befindet, und
- Befestigen der Ränder des Beutels an den Rändern der Aufnahme (9).

3. Verfahren nach Anspruch 2, wobei der Beutel ein Fassungsvermögen hat, das dem Volumen der Vertiefung der Aufnahme (9) entspricht.

4. Verfahren nach einem der Ansprüche 1 bis 3, wobei die Oberfläche vertikal ist.

5. Verfahren nach Anspruch 4, wobei die Aufnahme (9) mindestens eine konvexe Seite aufweist und so positioniert ist, dass diese konvexe Seite zum Boden hin ausgerichtet ist.

6. Verfahren nach einem der Ansprüche 1 bis 5, wobei es ferner einen vorherigen Schritt umfasst, bei dem der abzureibende bzw. abzuschleifende Bereich (10) abgegrenzt wird, wobei der Abriebvorgang anschließend ausschließlich in diesem Bereich (10) und über die gesamte Dicke der Beschichtung bewirkt wird.

7. Verfahren nach Anspruch 6, wobei es ferner einen dem Abrieb vorausgehenden Schritt umfasst, bei dem ein Foto des abzureibenden bzw. abzuschleifenden Bereichs (10) aufgenommen wird, neben dem ein Messinstrument platziert wurde.

8. Verfahren nach einem der Ansprüche 1 bis 7, wobei die beschichtete Oberfläche eben ist.

9. Probenentnahmekit zur Durchführung des Verfahrens nach einem der Ansprüche 1 bis 8, umfassend:
- mindestens ein modifiziertes oszillierendes Sägeblatt (2), das einen Befestigungsabschnitt (3) zur Befestigung an der oszillierenden Säge (1) aufweist, der sich in einen Verbindungsabschnitt (4) fortsetzt, der einen Winkel (α) mit der Ebene des Befestigungsabschnitts (3) bildet, wobei dieser Verbindungsabschnitt (4) in einem Abriebabschnitt (5) endet, der einen Winkel (180°-α) mit der Ebene des Verbindungsabschnitts (4) derart bildet, dass er parallel zum Befestigungsabschnitt (3) verläuft, und der ein gezahntes Ende (6) aufweist, das von der Ebene des Befestigungsabschnitts (3) weg gekrümmt ist, und
- eine Aufnahme (9), deren Öffnung (8) einen Rand aufweist, der ausgebildet ist, um sich der Form der beschichteten Oberfläche anzupassen, und der eine Aussparung (7) aufweist, die für den Durchgang des Abriebabschnitts (5) des modifizierten Sägeblatt (2) unter Berücksichtigung seiner Oszillationsbewegungen vorgesehen ist.

10. Probenentnahmekit nach Anspruch 9, wobei es ferner mindestens einen zumindest teilweise transparenten Beutel umfasst.

11. Probenentnahmekit nach Anspruch 10, wobei der Beutel ein Fassungsvermögen aufweist, das dem Volumen der Vertiefung der Aufnahme (9) entspricht.

12. Probenentnahmekit nach einem der Ansprüche 9 bis 11, wobei sich die Vertiefung (7) im transparenten Teil der Aufnahme (9) befindet.

13. Probenentnahmekit nach einem der Ansprüche 9 bis 12, wobei die Aufnahme (9) mindestens eine konvexe Seite aufweist.

14. Probenentnahmekit nach einem der Ansprüche 9 bis 13, wobei es ferner eine oszillierende Säge (1) umfasst.

## Claims

1. A method of taking a sample from a coated surface, comprising the following steps:
- providing an oscillating saw (1),
- providing a modified oscillating saw blade (2), having a mounting section (3) for attachment to the oscillating saw (1) which extends into a connecting section (4) forming an angle (α) with the plane of the mounting section (3), this connecting section (4) terminating in an abrasive section (5) forming an angle (180-α) with the plane of the connecting section (4), such that it is parallel to the attachment section (3), and having a toothed end (6) curved away from the plane of the attachment section (3),
- providing a container (9) having at least one transparent section and an opening (8) whose rim is designed to conform to the shape of the coated surface and which includes a recess (7) designed to allow the abrasive section (5) of the modified blade (2) to pass through, taking into account its oscillating movements,
- attaching the modified blade (2) to the oscillating saw (1),
- pressing the opening of the container (9) against the coated surface,
- passing the abrasive section (5) of the modified blade (2) into the recess (7) of the container (9), through the wall thereof,
- activating the oscillating saw (2) and
- proceeding with the abrasion of the surface by pressing the curved toothed end (6) of the abrasive section (5) against the coated surface and monitoring the operation through the transparent part of the container (9).

2. The method according to claim 1, further comprising the following steps, carried out before pressing the opening of the container (9) against the coated surface:
- providing an at least partially transparent sachet,
- opening it,
- inserting it into the container (9) and folding its edges over the rims of the container (9), with the transparent part of the sachet being on the same side as the transparent part of the container (9), and
- securing the edges of the sachet to the rims of the container (9).

3. The method according to claim 2, wherein the sachet has a capacity corresponding to the volume of the recess in the container (9).

4. The method according to one of claims 1 to 3, wherein the surface is vertical.

5. The method according to claim 4, wherein the container (9) has at least one convex side and is positioned such that this convex side faces the floor.

6. The method according to any one of claims 1 to 5, further comprising a preliminary step of marking out the area to be abraded (10), the abrasion operation then being carried out solely in that area (10) and in the entire thickness of the coating.

7. The method according to claim 6, further comprising a step, prior to abrasion, of taking a photograph of the area to be abraded (10) alongside which a graduated instrument has been placed.

8. The method according to any one of claims 1 to 7, wherein the coated surface is flat.

9. A sampling kit for carrying out the method according to any one of claims 1 to 8, comprising:
- at least one modified oscillating saw blade (2), having a mounting section (3) for attachment to the oscillating saw (1) which extends into a connecting section (4) forming an angle (α) with the plane of the mounting section (3), this connecting section (4) terminating in an abrasive section (5) forming an angle (180-α) with the plane of the connecting section (4), such that it is parallel to the attachment section (3), and having a toothed end (6) curved away from the plane of the attachment section (3), and
- a container (9) whose opening (8) has a rim designed to conform to the shape of the coated surface and comprising a recess (7) designed to allow the passage of the abrasion section (5) of the modified blade (2), taking into account its oscillatory movements.

10. The sampling kit according to claim 9, further comprising at least one at least partially transparent sachet.

11. The sampling kit according to claim 10, in which the sachet has a capacity corresponding to the volume of the recess in the container (9).

12. The sampling kit according to any one of claims 9 to 11, wherein the recess (7) is located in the transparent part of the container (9).

13. The sampling kit according to any one of claims 9 to 12, wherein the container (9) has at least one convex side.

14. The sampling kit according to any one of claims 9 to 13, further comprising an oscillating saw (1).
